# EUROPEAN PATENT APPLICATION

(11) **EP 4 531 289 A1**
(43) Date of publication of application: **02.04.2025**
(21) Application number: 23200461.4
(22) Date of filing: 28.09.2023
(51) Int. Cl.: H04B 1/00, H04B 1/16, G01R 29/08

(54) **RADIO FREQUENCY RECEIVER MODULE AND SIGNAL ANALYSIS DEVICE**

(71) Applicant: Rohde & Schwarz GmbH & Co. KG, 81671 München (DE)
(72) Inventor: Nowak, Thomas, 81671 München (DE)
(74) Representative: Prinz & Partner mbB

(57) **Abstract**

A radio frequency (RF) receiver module (18) is described. The RF receiver module (18) comprises a signal input (22) being configured to receive an RF signal. The receiver module (18) further comprises a splitter unit (24), wherein the splitter unit (24) is connected to the signal input (22) so as to receive the RF signal. The splitter unit (24) comprises at least two signal outputs, wherein the splitter unit (24) is configured to split the RF signal such that the RF signal is forwarded to each signal output of the splitter unit (24). The receiver module (18) comprises at least two signal processing branches (26, 28) that are connected to one of the signal outputs, respectively. Each signal processing branch (26, 28) comprises a high-pass filter (30, 64) that is provided downstream of the respective signal output of the splitter unit (24). Each signal processing branch (26, 28) further comprises a frequency-separating module (32, 66) that is provided downstream of the respective high-pass filter (30, 64). The frequency-separating module (32, 66) is configured to split a received signal into a plurality of signals processed in different signal processing paths (40, 42, 44, 74, 76, 78). Each signal processing path comprises an anti-aliasing filter (58, 60, 62, 80, 82, 84) and an analog-to-digital converter (56). Further, a signal analysis device (14) is described.

## Description

The present invention generally relates to a radio frequency receiver module. The present invention further relates to a signal analysis device.

Wideband receivers are used in different applications in order to detect signals, particularly unknown signals, that may be distributed over a large frequency band.

In general, it is desirable to provide the wideband receiver with a high detection probability of detecting a wanted signal, wherein both the linearity and the instantaneous bandwidth of the wideband receiver are high.

Therein, intermodulation products of second order and second order harmonics have to be sufficiently suppressed such that these distortion signals are not erroneously interpreted as a wanted signal.

Common techniques known in the state of the art usually only allow for either a high detection probability or for a high linearity.

Thus, the object of the present invention is to provide a radio frequency receiver module with increased detection probability of detecting a wanted signal, wherein both the linearity and the instantaneous bandwidth of the wideband receiver are high.

According to the invention, the problem is solved by a radio frequency (RF) receiver module. The RF receiver module comprises a signal input being configured to receive an RF signal. The receiver module further comprises a splitter unit, wherein the splitter unit is connected to the signal input so as to receive the RF signal. The splitter unit comprises at least two signal outputs, wherein the splitter unit is configured to split the RF signal such that the RF signal is forwarded to each signal output of the splitter unit. The receiver module comprises at least two signal processing branches that are connected to one of the signal outputs, respectively. Each signal processing branch comprises a high-pass filter that is provided downstream of the respective signal output of the splitter unit. Each signal processing branch further comprises a frequency-separating module that is provided downstream of the respective high-pass filter. The frequency-separating module is configured to split a received signal into a plurality of signals processed in different signal processing paths. Each signal processing path comprises an anti-aliasing filter and an analog-to-digital converter.

According to the present invention, the received RF signal is split into at least two identical RF signals that are each pre-processed by the respective high-pass filter of the respective signal processing branch.

The at least two RF signals are then processed by the respective frequency-separating module. The frequency-separating modules each comprises at least two outputs, wherein the at least two outputs each have a defined filter characteristic.

The frequency separating module may thus also be called a "filter switch".

Therein, different outputs of the frequency-separating modules have different filter characteristics, such that the signals processed in different signal processing paths corresponds to different sub-bands of the received RF signal.

Accordingly, the analog-to-digital converters provided in different signal processing paths digitize different sub-bands of the received RF signal.

It has turned out that the RF receiver module according to the present invention allows to digitize the received RF signal with a high instantaneous bandwidth, as the individual ADCs only digitize a sub-band of the received signal, respectively.

Further, it has turned out that combining the frequency-separating modules with the respective high-pass filters and anti-aliasing filters allows for an effective suppression of unwanted input frequencies (i.e. frequency bands that are not of interest) as well as for an effective suppression of intermodulation products of second order and second order harmonics.

In fact, signals outside of a preselected band can be efficiently blocked such that the detection of a desired signal in the received RF signal is not impaired.

Accordingly, the RF receiver module according to the present invention allows for a detection probability of up to 100% over the whole relevant bandwidth of the received RF signal, particularly without down-times at certain frequencies.

Accordingly, the RF receiver module according to the present invention provides a wideband receiver that has an enhanced detection probability, wherein both the linearity and the instantaneous bandwidth of the wideband receiver are high.

According to an aspect of the present invention, the frequency-separating module is established as a triplexer. Accordingly, the frequency-separating module has an input that is configured to receive the RF signal filtered by the respective high-pass filter. The frequency-separating module further comprises three outputs having different filter characteristics, such that the RF signal is split into three different sub-bands processed by three signal processing paths connected to the three outputs. Therein, the signals being associated with the three different sub-bands are output by the triplexer simultaneously.

In an embodiment of the present invention, a first output of the triplexer has a high-pass characteristic, a second output of the triplexer has a band-pass characteristic, and/or a third output of the triplexer has a low-pass characteristic. This allows to split the received signal into three different frequency sub-bands, particularly wherein the three different frequency sub-bands are overlap-free.

According to another aspect of the present invention, a ratio of a high-cut frequency of the second output of the triplexer to a low-cut frequency of the second output of the triplexer can be larger than two. In other words, the second output of the triplexer does not have to be a sub-octave filter per se, i.e. a ratio of the high-cut frequency to the low-cut frequency of the second output does not have to be smaller than 2.

Of course, this likewise applies to any other embodiment of the frequency-separating module in which at least one of the outputs has a band-pass characteristic. The output(s) having a band-pass characteristic does/do not have to be a sub-octave filter.

For each signal processing path, the high-pass-filter, the respective output of the frequency-separating module, and the anti-aliasing filter may establish a sub-octave filter structure. Accordingly, for each output signal of the anti-aliasing filters provided in the different signal processing paths, a ratio of a highest frequency of the respective output signal to a lowest frequency of the respective output signal is smaller than 2. Such sub-octave filter structures allow for a particularly efficient suppression of intermodulation products of second order and second order harmonics.

It has turned out that a ratio between 1.4 and 1.9, particularly between 1.5 and 1.8 is particularly advantageous.

In a further embodiment of the present invention, frequency sub-bands processed by the ADCs in different signal processing paths within the same signal processing branch are overlap-free. In other words, output signals of anti-aliasing filters within the same signal processing branch do not overlap each other in frequency domain, as these output signals are overlap-free in frequency domain.

According to a further aspect of the present invention, frequency sub-bands processed by the ADCs in different signal processing branches overlap pairwise. In other words, neighboring sub-bands are processed in different signal processing branches and overlap each other.

Particularly, the frequency sub-bands processed by the ADCs in different signal processing branches overlap pairwise such that the sub-bands together establish a continuous frequency band.

This ensures that a desired frequency spectrum, particularly the continuous frequency band, can reliably be monitored for wanted signals, as there are no gaps between neighboring frequency sub-bands.

Particularly, high-pass filters provided in different signal processing branches have different cut-off frequencies. Accordingly, the RF signals forwarded to the different signal processing branches are pre-filtered with different cut-off frequencies, i.e. with different low-cut frequencies. This allows for an efficient suppression of intermodulation products of second order and second order harmonics, as well as of signals outside of a preselected band.

According to an aspect of the present invention, the splitter unit may be a reactive splitter or a resistive splitter.

If the splitter unit is a resistive splitter, the splitter unit may be a directional coupler, a resistive coupler, a power splitter, or another suitable type of resistive splitter.

If the splitter unit is a reactive splitter, the splitter unit may be a filter switch, particularly a diplexer or a triplexer, or another suitable type of reactive splitter being based on a filter functionality.

Another aspect of the present invention provides that at least one of the signal processing paths comprises a leveling module, wherein the leveling module is configured to selectively attenuate and/or amplify a signal processed in the respective signal processing path, particularly wherein each signal processing path comprises a leveling module. In general, the leveling module may adjust a signal level of the respective signal to be appropriate for the ADC provided downstream of the leveling module. More precisely, the leveling module may adjust the signal level of the respective signal such that the ADC is operated in its linear operating range. Thus, disturbances caused by the ADC being operated in a non-linear operating range are avoided.

In fact, the leveling modules provided in different signal processing paths may be independent of each other. In other words, the signal levels of signals processed in different signal processing paths being associated with different frequency sub-bands can be adapted independent of each other.

This allows for an optimized processing of the individual frequency sub-bands. As the different frequency sub-bands can be leveled independent of each other, sub-bands with a high signal level can be attenuated without losing sensitivity in the other sub-bands. Likewise, sub-bands with a low signal level can be amplified without leaving the linear operating range of the ADCs processing the other sub-bands. Thus, the detection probability of detecting a wanted signal in the received RF signal is increased over the entire relevant frequency spectrum.

In an embodiment of the present invention, the leveling module comprises a bypass path. Accordingly, the leveling module may route the signal processed in the respective signal processing path through the bypass path, such that the signal is neither amplified nor attenuated. This mode of the leveling module is appropriate if the signal level is already within the linear operating range of the ADC.

A further aspect of the present invention provides that the leveling module comprises an attenuation path, wherein the attenuation path comprises an attenuator, particularly an adjustable attenuator. The leveling module may route the signal processed in the respective signal processing path through the attenuation path, such that the signal is attenuated by means of the attenuator. This mode of the leveling module is appropriate if the signal level is above the linear operating range of the ADC.

The leveling module may comprise an amplification path, wherein the amplification path comprises an amplifier, particularly an adjustable amplifier. The leveling module may route the signal processed in the respective signal processing path through the amplification path, such that the signal is amplified by means of the amplifier. This mode of the leveling module is appropriate if the signal level is below the linear or rather an ideal operating range of the ADC, or too small for subsequent processing.

According to the present invention, the problem further is solved by a signal analysis device. The signal analysis device comprises an RF receiver module described above. The signal analysis device further comprises a signal analysis module that is connected to the RF receiver module.

Regarding the advantages and further properties of the signal analysis device, reference is made to the explanations given above with respect to the RF receiver module, which also hold for the signal analysis device and vice versa.

For example, the signal analysis device may be a direction finder, a mobile network tester, a (standalone) RF receiver, particularly an external frontend, a satellite monitoring device, a radio system component, a signal analyzer, a spectrum analyzer, a software defined radio, or a wireless communication tester.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a measurement system with a signal analysis device according to the present invention; and
- Figure 2 schematically shows an RF receiver module of the signal analysis device of Figure 1 in more detail.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

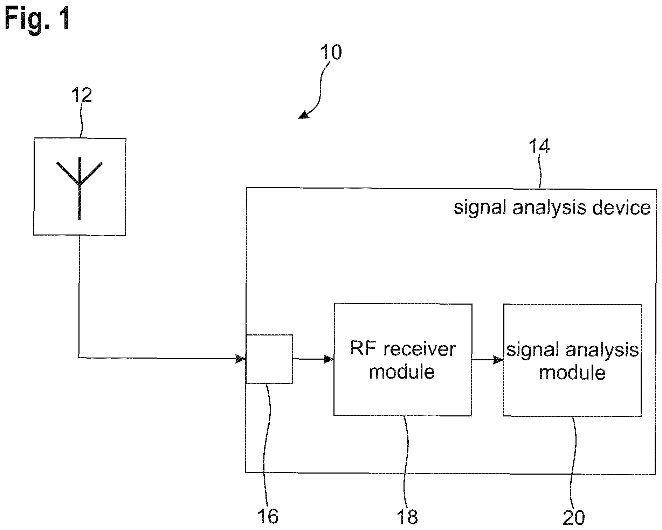

Figure 1 schematically shows a measurement system 10 comprising at least one radio frequency (RF) antenna 12 and a signal analysis device 14.

The at least one RF antenna 12 may be a single antenna.

Alternatively, the at least one RF antenna 12 may be an antenna array comprising several RF antennas.

Further, while the at least one RF antenna 12 is shown to be established separately from the signal analysis device 14 in Figure 1, it is also conceivable that the at least one RF antenna 12 may be integrated into the signal analysis device 14.

In general, the signal analysis device 14 is configured to receive and analyze RF signals received via the at least one RF antenna 12.

More precisely, the signal analysis device 14 comprises an input port 16 that is connected with the at least one RF antenna 12.

The signal analysis device 14 further comprises an RF receiver module 18 that is connected with the input port 16 so as to receive the RF signals received via the at least one RF antenna 12.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The receiver module 18 will be described in more detail below.

The signal analysis device 14 further comprises a signal analysis module 20 that is configured to analyze an output signal of the receiver module 18.

The type of analysis performed by the signal analysis module 20 may depend on the type of the signal analysis device 14 and the corresponding setting of the signal analysis device 14.

For example, the signal analysis device 14 may be a direction finder, a mobile network tester, a (standalone) RF receiver, particularly an external frontend, a satellite monitoring device, radio system component, a signal analyzer, a spectrum analyzer, a software defined radio, or a wireless communication tester.

However, the signal analysis device 14 may be established as any other suitable type of electronic device.

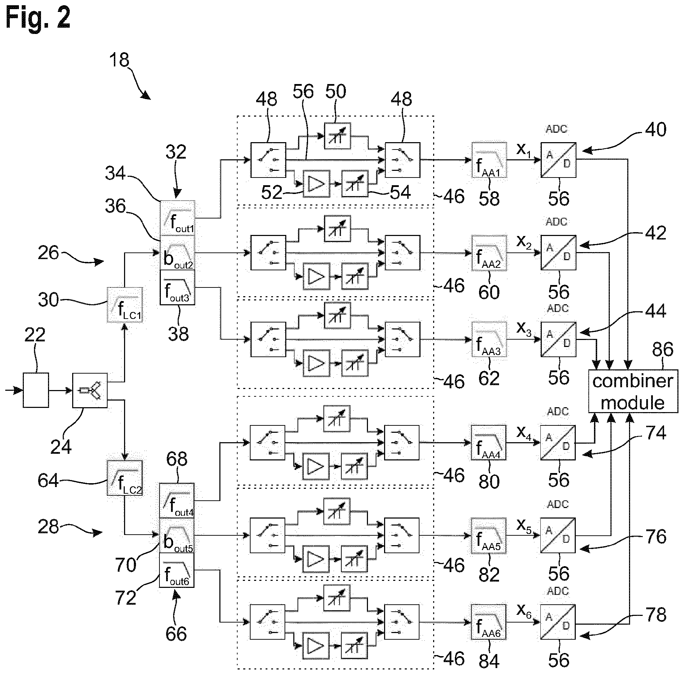

Figure 2 shows the RF receiver module 18 in more detail.

The RF receiver module 18 comprises a signal input 22 that is connected to the input port 16 so as to receive an RF signal from the at least one RF antenna 12.

Downstream of the signal input 22, a splitter unit 24 is provided.

In the exemplary embodiment shown in Figure 2, the splitter unit 24 comprises two signal outputs that are connected to a first signal processing branch 26 and to a second signal processing branch 28.

The splitter unit 24 is configured to split the RF signal such that the RF signal is forwarded to both signal processing branches 26, 28.

It is noted that the splitter unit 24 may have more than two signal outputs, and that the RF receiver module 18 may comprise more than two signal processing branches connected to the splitter unit 24.

Without restriction of generality, the exemplary case of two signal processing branches 26, 28 is described in the following.

The first signal processing branch 26 comprises a first high-pass filter 30 that is provided downstream of the splitter unit 24.

As is indicated in Figure 2, the first high-pass filter 30 has a first low-cut frequency *f*_{*LC*1}*.*

Downstream of the first high-pass filter 30, a first frequency-separating module 32 is provided.

In general, the first frequency-separating module 32 is configured to split a signal received from the first high-pass filter 30 into a plurality of signals that are afterwards processed in a plurality of different signal processing paths, wherein the plurality of signals corresponds to different frequency sub-bands of the received RF signal.

In the exemplary embodiment shown in Figure 2, the first frequency-separating module 32 is established as a triplexer that is configured to split the signal received from the first high-pass filter 30 into three signals that are output via a first output 34, a second output 36, and a third output 38.

It is noted that the first frequency-separating module 32 may be configured to split the signal received from the first high-pass filter 30 into two, four or more signals.

Without restriction of generality, the exemplary case of the first frequency-separating module 32 being established as a triplexer is described in the following.

The first output 34 has a high-pass characteristic, wherein the first output 34 has a low-cut frequency *f*_{*out*1}*.*

The first output 34 is connected to a first signal processing path 40 such that the signal filtered by the first output 34 is forwarded to the first signal processing path 40.

The second output 36 has a band-pass characteristic, i.e. the second output passes frequencies within a frequency band *b*_{*out*2}*.*

In other words, the second output 36 has a low-cut frequency *f*_{*out*2,*L*} and a high-cut frequency *f*_{*out*2*,H*} that confine the frequency band *b*_{*out*2}*.*

It is emphasized that the second output 36 does not have to sub-octave, i.e. it is not necessary that *f*_{*out*2}*_{,H} <* 2 · *f*_{*out*2}*_{,L}.*

The second output 36 is connected to a second signal processing path 42 such that the signal filtered by the second output 36 is forwarded to the second signal processing path 42.

The third output 38 has a low-pass characteristic, wherein the third output 38 has a high-cut frequency *f*_{*out*3}.

The third output 38 is connected to a third signal processing path 44 such that the signal filtered by the third output 38 is forwarded to the third signal processing path 44.

Each of the signal processing paths 40, 42, 44 comprises a leveling module 46 that is provided downstream of the frequency-separating module 32.

In general, the leveling module 46 is configured to selectively attenuate and/or amplify a signal processed in the respective signal processing path 40, 42, 44.

In the exemplary embodiment shown in Figure 2, the leveling module 46 is switchable between three different modes, as is indicated by the switches 48.

In a first mode, the leveling module 46 is configured to route the signal processed in the respective signal processing path 40, 42, 44 through an attenuation path and to attenuate the signal by means of an attenuator 50.

Particularly, the attenuator 50 may be established as an adjustable attenuator, such that the attenuation applied to the signal processed in the respective signal processing path 40, 42, 44 is adjustable.

In a second mode, the leveling module 46 is configured to route the signal processed in the respective signal processing path 40, 42, 44 through an amplification path and to amplify the signal by means of an amplifier 52.

Optionally, an attenuator 54 may be provided downstream of the amplifier 52.

Particularly, the amplifier 52 may be established as an adjustable amplifier and/or the attenuator 54 may be established as an adjustable attenuator, such that the amplification applied to the signal processed in the respective signal processing path 40, 42, 44 is adjustable.

In a third mode, the leveling module 46 is configured to route the signal processed in the respective signal processing path 40, 42, 44 through a bypass path 56, such that the signal is neither amplified nor attenuated.

The leveling module 46 may be controlled to automatically set the appropriate mode, i.e. the first mode, the second mode, or the third mode, and/or the amplification or attenuation applied to the respective signal based on a signal level of the signal processed in the respective signal processing path 40, 42, 44, e.g. via a suitable control module of the signal analysis device 14.

In fact, the leveling module 46 may be controlled to selectively attenuate and/or amplify a signal processed in the respective signal processing path 40, 42, 44 such that the signal level is adapted to be appropriate for processing by an analog-to-digital converter (ADC) 56 provided downstream of the leveling module 46.

More precisely, the signal level may be adapted such that the respective ADC 56 is operated in its linear operating range.

Further, it is noted that the leveling modules 46 provided in different signal processing paths 40, 42, 44 may be independent of each other.

In other words, the signal levels of signals processed in different signal processing paths 40, 42, 44 can be adapted independent of each other.

The first signal processing path 40 further comprises a first anti-aliasing filter 58 that is provided between the leveling module 46 and the ADC 56.

The first anti-aliasing filter 58 has a low-pass characteristic and has a high-cut frequency *f*_{*AA*1}.

The second signal processing path 42 further comprises a second anti-aliasing filter 60 that is provided between the leveling module 46 and the ADC 56.

The second anti-aliasing filter 60 has a low-pass characteristic and has a high-cut frequency *f*_{*AA*2}.

The third signal processing path 44 further comprises a third anti-aliasing filter 62 that is provided between the leveling module 46 and the ADC 56.

The third anti-aliasing filter 62 has a low-pass characteristic and has a high-cut frequency *f*_{*AA*3}.

The second signal processing branch 28 is established analogously to the first signal processing branch 26, but with different cut-off frequencies.

The second signal processing branch 28 comprises a second high-pass filter 64 having a second low-cut frequency *f*_{*LC*2} that is different from the first low-cut frequency *f*_{*LC*1}*.*

The second signal processing branch 28 further comprises a second frequency-separating module 66 that comprises a fourth output 68, a fifth output 70, and a sixth output 72.

It is noted that the fourth output 68 is actually the first output of the second frequency-separating module 66, etc. However, for better intelligibility, the outputs are numbered consecutively between the frequency-separating modules 32, 66.

The fourth output 68 has a high-pass characteristic, wherein the fourth output 68 has a low-cut frequency *f*_{*out*4}.

The fourth output 68 is connected to a fourth signal processing path 74 such that the signal filtered by the fourth output 68 is forwarded to the fourth signal processing path 74.

The fifth output 70 has a band-pass characteristic, i.e. the fifth output 70 passes frequencies within a frequency band *b*_{*out*5}*.*

In other words, the fifth output 70 has a low-cut frequency *f*_{*out*5,*L*} and a high-cut frequency *f*_{*out*5,*H*} that confine the frequency band *b*_{*out*5}*.*

It is emphasized that the fifth output 70 does not have to sub-octave, i.e. it is not necessary that *f*_{*out*5,*H*} < 2 · *f*_{*out*5}*_{,L}.*

The fifth output 70 is connected to a fifth signal processing path 76 such that the signal filtered by the fifth output 70 is forwarded to the fifth signal processing path 76.

The sixth output 72 has a low-pass characteristic, wherein the sixth output 72 has a high-cut frequency *f*_{*out*6}.

The sixth output 72 is connected to a sixth signal processing path 78 such that the signal filtered by the sixth output 72 is forwarded to the sixth signal processing path 78.

The fourth signal processing path 74 further comprises a fourth anti-aliasing filter 80 that is provided between the leveling module 46 and the ADC 56.

The fourth anti-aliasing filter 80 has a low-pass characteristic and has a high-cut frequency *f*_{*AA*4}.

The fifth signal processing path 76 further comprises a fifth anti-aliasing filter 82 that is provided between the leveling module 46 and the ADC 56.

The fifth anti-aliasing filter 82 has a low-pass characteristic and has a high-cut frequency *f*_{*AA*5}.

The sixth signal processing path 78 further comprises a sixth anti-aliasing filter 84 that is provided between the leveling module 46 and the ADC 56.

The sixth anti-aliasing filter 84 has a low-pass characteristic and has a high-cut frequency *f*_{*AA*6}.

The cut-off frequencies *f_{LCi}, fₒᵤₜᵢ, f_{outi,L}, f_{outi,H},* and *f_{AAi}* are chosen such that the criteria described hereinafter are met.

For each signal processing path 40, 42, 44, 74, 76, 78, the high-pass-filter, the respective output of the frequency-separating module, and the anti-aliasing filter establish a sub-octave filter structure.

For example, the first high-pass filter 30, the third output 38 of the first frequency-separating module 32, and the third anti-aliasing filter 62 establish a sub-octave filter structure.

Accordingly, for each output signal *xᵢ* of the anti-aliasing filters 58, 60, 62, 80, 82, 84, the highest frequency comprised in the output signal *xᵢ* is less than double the lowest frequency comprised in the output signal *xᵢ.*

Frequency sub-bands associated with output signals *xᵢ* of the anti-aliasing filters 58, 60, 62, 80, 82, 84 within the same signal processing branch 26, 28 are overlap-free.

In the exemplary embodiment shown in Figure 2, the frequency sub-bands of the output signals *x*₁, *x*₂, and *x*₃ do not overlap with each other.

Further, the frequency sub-bands of the output signals *x*₄, *x*₅, and *x*₆ do not overlap with each other.

Accordingly, frequency sub-bands processed by the ADCs 56 in different signal processing paths 40, 42, 44, 74, 76, 78 within the same signal processing branch 26, 28 are overlap-free.

Frequency sub-bands associated with output signals *xᵢ* of the anti-aliasing filters 58, 60, 62, 80, 82, 84 of different signal processing branches 26, 28 overlap pairwise, particularly such that the frequency sub-bands of the output signals *xᵢ* together establish a continuous frequency band.

In other words, frequency sub-bands processed by the ADCs 56 in different signal processing branches 26, 28 overlap pairwise.

For example, the first output signal *x*₁ may have a first frequency sub-band *b*₁ that establishes the upper end of the continuous frequency band.

A lower end of the first frequency sub-band *b*₁ may overlap with an upper end of a fourth frequency sub-band *b*₄ of the fourth output signal *x*₄.

A lower end of the fourth frequency sub-band *b*₄ may overlap with an upper end of a second frequency sub-band *b*₂ of the second output signal *x*₂.

A lower end of the second frequency sub-band *b*₂ may overlap with an upper end of a fifth frequency sub-band *b*₅ of the fifth output signal *x*₅.

A lower end of the fifth frequency sub-band *b*₅ may overlap with an upper end of a third frequency sub-band *b*₃ of the third output signal *x*₃.

A lower end of the third frequency sub-band *b*₃ may overlap with an upper end of a sixth frequency sub-band *b*₆ of the sixth output signal *x*₆.

In a particular example, *b*₁ may be a sub-band between 15 and 19 GHz, *b*₄ may be a sub-band between 12 and 16 GHz, *b*₂ may be a sub-band between 9 and 13 GHz, *b*₅ may be a sub-band between 6 and 10 GHz, *b*₃ may be a sub-band between 4 and 7 GHz, and *b*₆ may be a sub-band between 3 and 5 GHz.

In this particular example, the cut-off frequencies may be chosen as *f*_{*LC*1} = 4 GHz, *f*_{*LC*2} = 3 GHz, *f*_{*out*1} = 15 GHz, *f*_{*out*2,*L*} = 9 GHz, *f*_{*out*2*,H*} ≥ 13 GHz, *f*_{*out*3} ≥ 7 GHz, *f*_{*out*4} = 12 GHz, *f*_{*out*5,*L*} = 6 GHz, *f*_{*out*5,*H*} ≥ 10 GHz, *f*_{*out*6} ≥ 5 GHz, *f*_{*AA*1} = 19 GHz, *f*_{*AA*2} = 13 GHz, *f*_{*AA*3} = 7 GHz, *f*_{*AA*4} = 16 GHz, *f*_{*AA*5} = 10 GHz, and *f*_{*AA*6} = 5 GHz.

The ADCs 56 digitize the signals *xᵢ* (*i* = 1 ... 6) received from the respective anti-aliasing filter 58, 60, 62, 80, 82, 84 and forward the digitized signals to a combiner module 86.

The combiner module 86 is configured to combine the digitized signals into a single digital signal, thereby obtaining an output signal of the RF receiver module 18.

The output signal of the RF receiver module 18 may be forwarded to the signal analysis module 20 for further processing and/or analysis.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radio frequency (RF) receiver module, wherein the RF receiver module (18) comprises a signal input (22) being configured to receive an RF signal,
wherein the receiver module (18) further comprises a splitter unit (24), wherein the splitter unit (24) is connected to the signal input (22) so as to receive the RF signal, wherein the splitter unit (24) comprises at least two signal outputs, and wherein the splitter unit (24) is configured to split the RF signal such that the RF signal is forwarded to each signal output of the splitter unit (24),
wherein the receiver module (18) comprises at least two signal processing branches (26, 28) that are connected to one of the signal outputs, respectively,
wherein each signal processing branch (26, 28) comprises a high-pass filter (30, 64) that is provided downstream of the respective signal output of the splitter unit (24),
wherein each signal processing branch (26, 28) further comprises a frequency-separating module (32, 66) that is provided downstream of the respective high-pass filter (30, 64), wherein the frequency-separating module (32, 66) is configured to split a received signal into a plurality of signals processed in different signal processing paths (40, 42, 44, 74, 76, 78), and
wherein each signal processing path comprises an anti-aliasing filter (58, 60, 62, 80, 82, 84) and an analog-to-digital converter (56).

2. The RF receiver module of claim 1, wherein the frequency-separating module (32, 66) is established as a triplexer.

3. The RF receiver module of claim 2, wherein a first output (34, 68) of the triplexer has a high-pass characteristic, a second output (36, 70) of the triplexer has a band-pass characteristic, and/or a third output (38, 72) of the triplexer has a low-pass characteristic.

4. The receiver module of claim 3, wherein a ratio of a high-cut frequency of the second output (36, 70) of the triplexer to a low-cut frequency of the second output (36, 70) of the triplexer is larger than two.

5. The RF receiver module according to any one of the preceding claims, wherein for each signal processing path (40, 42, 44, 74, 76, 78) the high-pass-filter (30, 64), the respective output (34, 36, 38, 68, 70, 72) of the frequency-separating module (32, 66), and the anti-aliasing filter (58, 60, 62, 80, 82, 84) establish a sub-octave filter structure.

6. The receiver module according to any one of the preceding claims, wherein frequency sub-bands processed by the ADCs (56) in different signal processing paths (40, 42, 44, 74, 76, 78) within the same signal processing branch (26, 28) are overlap-free.

7. The receiver module according to any one of the preceding claims, wherein frequency sub-bands processed by the ADCs (56) in different signal processing branches (26, 28) overlap pairwise.

8. The RF receiver module according to any one of the preceding claims, wherein high-pass filters (30, 64) provided in different signal processing branches (26, 28) have different cut-off frequencies.

9. The RF receiver module according to any one of the preceding claims, wherein the splitter unit (22) is a reactive splitter or a resistive splitter.

10. The RF receiver module according to any one of the preceding claims, wherein at least one of the signal processing paths (40, 42, 44, 74, 76, 78) comprises a leveling module (46), wherein the leveling module (46) is configured to selectively attenuate and/or amplify a signal processed in the respective signal processing path (40, 42, 44, 74, 76, 78), particularly wherein each signal processing path (40, 42, 44, 74, 76, 78) comprises a leveling module (46).

11. The RF receiver module of claim 10, wherein the leveling modules (46) provided in different signal processing paths (40, 42, 44, 74, 76, 78) are independent of each other.

12. The RF receiver module of claim 10 or 11, wherein the leveling module (46) comprises a bypass path (56).

13. The RF receiver module according to any one of claims 10 to 12, wherein the leveling module (46) comprises an attenuation path, wherein the attenuation path comprises an attenuator (50), particularly an adjustable attenuator.

14. The RF receiver module according to any one of claims 10 to 13, wherein the leveling module (46) comprises an amplification path, wherein the amplification path comprises an amplifier (52), particularly an adjustable amplifier.

15. A signal analysis device, wherein the signal analysis device (14) comprises an RF receiver module (18) according to any one of the preceding claims, and wherein the signal analysis device (14) further comprises a signal analysis module (20) that is connected to the RF receiver module (18).
